# EUROPEAN PATENT APPLICATION

(11) **EP 4 199 392 A1**
(43) Date of publication of application: **21.06.2023**
(21) Application number: 21863497.0
(22) Date of filing: 16.08.2021

(54) **METHOD FOR UPLOADING CONFIGURATION FILE, METHOD FOR DOWNLOADING CONFIGURATION FILE, AND APPARATUS**

(30) Priority: 03.09.2020 CN 202010917010
(71) Applicant: Huawei Technologies Co., Ltd., Shenzhen, Guangdong 518129 (CN)
(72) Inventor: LIU, Bin, Shenzhen, Guangdong 518129 (CN); GUO, Chunbao, Shenzhen, Guangdong 518129 (CN); YIN, Bin, Shenzhen, Guangdong 518129 (CN)
(74) Representative: Gill Jennings & Every LLP
(86) International application number: PCT/CN2021/112723
(87) International publication number: WO 2022/048430

(57) **Abstract**

Embodiments of this application disclose a method for uploading a configuration file, a method for downloading a configuration file, and apparatuses, to improve file transfer efficiency. The method for uploading a configuration file includes: obtaining, by a network device, a local configuration file, where the local configuration file includes configuration information of the network device; compressing, by the network device, the local configuration file, to obtain a compressed file; and sending, by the network device, a configuration file upload request to a storage apparatus, where the configuration file upload request includes the compressed file, and the configuration file upload request is used for requesting the storage apparatus to store the compressed file.

## Description

This application claims priority to Chinese Patent Application No. 202010917010.7, filed with the China National Intellectual Property Administration on September 3, 2020 and entitled "METHOD FOR UPLOADING CONFIGURATION FILE, METHOD FOR DOWNLOADING CONFIGURATION FILE, AND APPARATUS", which is incorporated herein by reference in its entirety.

### TECHNICAL FIELD

This application relates to the communication field, and in particular, to a method for uploading a configuration file, a method for downloading a configuration file, and apparatuses.

### BACKGROUND

To meet various packet transfer requirements, configuration information configured for a network device is usually stored on the network device in a form of a configuration file, to form a local configuration file, so that the network device can perform packet forwarding or processing based on the local configuration file. To obtain the local configuration file, the network device may download a target configuration file from a storage apparatus that stores the target configuration file corresponding to the network device, and store the downloaded target configuration file as the local configuration file, or update the local configuration file. Similarly, the network device may also upload the local configuration file to the storage apparatus, to perform backup management.

However, no matter whether the target configuration file is downloaded or the local configuration file is uploaded, there is a problem that file transfer takes a long time because the configuration file is large.

### SUMMARY

Embodiments of this application provide a method for uploading a configuration file, a method for downloading a configuration file, and apparatuses, to improve file transfer efficiency.

According to a first aspect, a method for uploading a configuration file is provided, used in a network device. The method includes the following steps. The network device obtains a local configuration file, where the local configuration file includes configuration information of the network device. The local configuration file may be, for example, an extensible markup language (Extensible Markup Language, XML) file. This is not specifically limited in this application. The network device compresses the local configuration file, to obtain a compressed file. The network device sends a configuration file upload request to a storage apparatus, where the configuration file upload request includes the compressed file. After receiving the configuration file upload request, the storage apparatus may store the compressed file. Because the compressed file obtained by compressing the local configuration file, instead of a local configuration file in a conventional technology, is transferred between the network device and the storage apparatus, and a size of the compressed file is less than a size of the local configuration file, transfer efficiency is improved.

In a possible design, before the network device compresses the local configuration file, the network device may receive a configuration file export request from a network management device, where the configuration file export request includes a compression algorithm identifier. The compression algorithm identifier indicates a compression algorithm used in a process of compressing the local configuration file by the network device, that is, the network management device specifies a compression algorithm that needs to be used by the network device to compress. In this case, the network device may compress the local configuration file based on the compression algorithm identifier, to implement an objective of compressing based on the compression algorithm specified by the network management device.

In a possible implementation, the compression algorithm identifier is a suffix of a file name of the compressed file. The suffix may be carried in a uniform resource locator (uniform resource locator, URL) of the configuration file export request. Certainly, the compression algorithm identifier may alternatively be carried in another location of the configuration file export request. This is not specifically limited in this application.

In a possible design, the configuration file export request further includes a compression algorithm parameter. Different compression algorithms correspond to different compression algorithm parameters. Correspondingly, the network device may compress the local configuration file based on the compression algorithm identifier and the compression algorithm parameter, to implement an objective of compressing by using the compression algorithm specified by the network management device and the compression algorithm parameter.

In a possible design, the local configuration file includes a plurality of configuration sub-files, and each of the plurality of configuration sub-files includes at least one yang module.

To improve file transfer security, in a possible design, the network device may encrypt the compressed file, and then send the configuration file upload request including the encrypted compressed file to the storage apparatus.

In a possible design, before the network device encrypts the compressed file, the network device may further receive encryption information from the network management device, where the encryption information indicate that the network device to encrypt the compressed file based on the encryption information, to improve file transfer security. The encryption information may include one or more of a password, a key, information about a location at which the network device stores the password, information about a location at which the network device stores the key, an identifier of an encryption algorithm, and the like.

According to a second aspect, a method for downloading a configuration file is provided, used in a network device. The method includes the following steps. The network device sends a configuration file download request to a storage apparatus; receives a compressed file sent by the storage apparatus based on the configuration file download request; and decompresses the compressed file, to obtain a target configuration file, where the target configuration file includes configuration information of the network device. Because the storage apparatus sends, to the network device, the compressed file obtained by compressing the target configuration file, instead of directly sending the target configuration file, file transfer efficiency is improved.

In a possible design, before the network device decompresses the compressed file, the network device may receive a configuration file import request from a network management device, where the configuration file import request includes a compression algorithm identifier, and the compression algorithm identifier indicates a compression algorithm used in a process of decompressing the compressed file by the network device. Correspondingly, the network device may decompress the compressed file based on the compression algorithm corresponding to the compression algorithm identifier, to implement an objective of compressing by using the compression algorithm specified by the network management device.

In a possible implementation, the compression algorithm identifier is a suffix of a file name of the compressed file. The suffix may be carried in a URL of a configuration file export request. Certainly, the compression algorithm identifier may alternatively be carried in another location of the configuration file export request. This is not specifically limited in this application.

To improve file transfer security, in a possible design, the network device may receive an encrypted compressed file sent by the storage apparatus based on the configuration file download request, and decrypt the encrypted compressed file.

In a possible design, before the network device decrypts the encrypted compressed file, the network device may receive decryption information from the network management device, where the decryption information indicates the network device to decrypt the encrypted compressed file based on the decryption information. The decryption information may include one or more of a password, a key, information about a location at which the network device stores the password, information about a location at which the network device stores the key, an identifier of a decryption algorithm, and the like.

To verify validity of a source of the compressed file, in a possible design, the network device may receive signature information from the storage apparatus, and verify the signature information based on a public key of the network device, to obtain a verification result, where the signature information is information obtained by signing the compressed file by using a private key. If the verification result is that the verification succeeds, it indicates that the source of the compressed file is valid, and the network device decompresses the compressed file.

In a possible design, the configuration file includes a plurality of configuration sub-files, and each of the plurality of configuration sub-files includes at least one yang module.

According to a third aspect, a method for sending a request is provided, used in a network management device. The method includes the following steps. The network management device generates a configuration file export request and sends the configuration file export request to a network device, where the configuration file export request indicates the network device to compress a local configuration file to obtain a compressed file and send the compressed file to a storage apparatus, the configuration file export request includes a compression algorithm identifier, and the compression algorithm identifier indicates a compression algorithm used in a process of compressing the local configuration file by the network device. That is, the network management device specifies the compression algorithm used by the network device to compress the local configuration file, and enables the network device to send, to the storage apparatus, the compressed local configuration file, instead of directly sending the local configuration file, thereby improving file transfer efficiency.

For other descriptions of the configuration file export request, refer to the first aspect. Details are not described herein again.

According to a fourth aspect, a method for sending a request is provided, used in a network management device. The method includes the following steps. The network management device generates a configuration file import request and sends the configuration file import request to a network device, where the configuration file import request indicates the network device to download a compressed file from a storage apparatus and decompress the compressed file to obtain a target configuration file, the configuration file import request includes a compression algorithm identifier, and the compression algorithm identifier indicates a compression algorithm used in a process of decompressing the compressed file by the network device. That is, the network management device specifies the compression algorithm used by the network device to decompress the compressed file, and the storage apparatus sends, to the network device, a compressed target configuration file, instead of directly sending the target configuration file, thereby improving file transfer efficiency.

For other descriptions of the configuration file import request, refer to the first aspect. Details are not described herein again.

According to a fifth aspect, an apparatus for uploading a configuration file is provided, used in a network device. The apparatus includes: an obtaining unit, configured to obtain a local configuration file, where the local configuration file includes configuration information of the network device; a compression unit, configured to compress the local configuration file, to obtain a compressed file; and a sending unit, configured to send a configuration file upload request to a storage apparatus, where the configuration file upload request includes the compressed file, and the configuration file upload request is used for requesting the storage apparatus to store the compressed file.

In a possible design, the apparatus further includes: a first receiving unit, configured to receive, before the compression unit compresses the local configuration file, a configuration file export request from a network management device, where the configuration file export request includes a compression algorithm identifier, and the compression algorithm identifier indicates a compression algorithm used in a process of compressing the local configuration file by the network device; and the compression unit, configured to compress the local configuration file based on the compression algorithm identifier.

In a possible design, the compression algorithm identifier is a suffix of a file name of the compressed file.

In a possible design, the configuration file export request includes a URL, and the URL includes the suffix.

In a possible design, the configuration file export request further includes a compression algorithm parameter; and
the compression unit is configured to compress the local configuration file based on the compression algorithm identifier and the compression algorithm parameter.

In a possible design, the local configuration file includes a plurality of configuration sub-files, and each of the plurality of configuration sub-files includes at least one yang module.

In a possible design, the sending unit is configured to encrypt the compressed file, and send the configuration file upload request including the encrypted compressed file to the storage apparatus.

In a possible design, the apparatus further includes: a second receiving unit, configured to receive, before the sending unit encrypts the compressed file, encryption information from the network management device, where the encryption information indicates the network device to encrypt the compressed file based on the encryption information.

According to a sixth aspect, an apparatus for downloading a configuration file is provided, used in a network device. The apparatus includes: a sending unit, configured to send a configuration file download request to a storage apparatus; a first receiving unit, configured to receive a compressed file sent by the storage apparatus based on the configuration file download request; and a decompression unit, configured to decompress the compressed file, to obtain a target configuration file, where the target configuration file includes configuration information of the network device.

In a possible design, the apparatus further includes: a second receiving unit, configured to receive, before the decompression unit decompresses the compressed file, a configuration file import request from a network management device, where the configuration file import request includes a compression algorithm identifier, and the compression algorithm identifier indicates a compression algorithm used in a process of decompressing the compressed file by the network device; and the decompression unit, configured to decompress the compressed file based on the compression algorithm corresponding to the compression algorithm identifier.

In a possible design, the compression algorithm identifier is a suffix of a file name of the compressed file.

In a possible design, the configuration file import request includes a uniform resource locator URL, and the URL includes the suffix.

In a possible design, the first receiving unit is configured to receive an encrypted compressed file sent by the storage apparatus based on the configuration file download request, and decrypt the encrypted compressed file.

In a possible design, the apparatus further includes: a third receiving unit, configured to receive, before the first receiving unit decrypts the encrypted compressed file, decryption information from the network management device, where the decryption information indicates the network device to decrypt the encrypted compressed file based on the decryption information.

In a possible design, the decompression unit is configured to receive signature information from the storage apparatus, and verify the signature information based on a public key of the network device, to obtain a verification result, where the signature information is information obtained by signing the compressed file by using a private key; and decompress, by the network device, the compressed file in a case that the verification result is that the verification succeeds.

In a possible design, the configuration file includes a plurality of configuration sub-files, and each of the plurality of configuration sub-files includes at least one yang module.

According to a seventh aspect, an apparatus for sending a request is provided, used in a network management device. The apparatus includes: a generation unit, configured to generate a configuration file export request, where the configuration file export request indicates a network device to compress a local configuration file to obtain a compressed file and send the compressed file to a storage apparatus, the configuration file export request includes a compression algorithm identifier, and the compression algorithm identifier indicates a compression algorithm used in a process of compressing the local configuration file by the network device; and a sending unit, configured to send the configuration file export request to the network device.

In a possible design, the sending unit is further configured to send encryption information to the network device, where the encryption information is used for encrypting the compressed file by the network device.

According to an eighth aspect, an apparatus for sending a request is provided, used in a network management device. The apparatus includes: a generation unit, configured to generate a configuration file import request, where the configuration file import request indicates a network device to download a compressed file from a storage apparatus and decompress the compressed file to obtain a target configuration file, the configuration file import request includes a compression algorithm identifier, and the compression algorithm identifier indicates a compression algorithm used in a process of decompressing the compressed file by the network device; and a sending unit, configured to send the configuration file import request to the network device.

In a possible design, the sending unit is further configured to send decryption information to the network device, where the decryption information indicates the network device to decrypt the encrypted compressed file based on the decryption information.

According to a ninth aspect, a network device is provided. The network device includes at least one processor, the at least one processor is coupled to at least one memory, and the at least one processor is configured to execute a computer program or instructions stored in the at least one memory, to enable the network device to perform the method for uploading a configuration file according to the first aspect, or perform the method for downloading a configuration file according to the second aspect.

According to a tenth aspect, a network management device is provided. The network management device includes at least one processor, the at least one processor is coupled to at least one memory, and the at least one processor is configured to execute a computer program or instructions stored in the at least one memory, to enable the network management device to perform the method for sending a request according to the third aspect.

According to an eleventh aspect, a network system is provided. The system includes a network device and a storage apparatus, the network device is configured to perform the method for uploading a configuration file according to the first aspect, and the storage apparatus is configured to store a compressed file.

According to a twelfth aspect, a network system is provided. The system includes a network device and a storage apparatus, the network device is configured to perform the method for downloading a configuration file according to the second aspect, and the storage apparatus is configured to send a compressed file to the network device.

According to a thirteenth aspect, a computer-readable storage medium is provided, including instructions, a program, or code. When the instructions, the program, or the code is executed on a computer, the computer is enabled to perform the method for uploading a configuration file according to the first aspect, or perform the method for downloading a configuration file according to the second aspect, or perform the method for sending a request according to the third aspect.

According to a fourteenth aspect, a chip is provided, including a memory and a processor. The memory is configured to store instructions or program code, and the processor is configured to call and run the instructions or the program code from the memory, to perform the method for uploading a configuration file according to the first aspect, or perform the method for downloading a configuration file according to the second aspect, or perform the method for sending a request according to the third aspect.

### BRIEF DESCRIPTION OF DRAWINGS

FIG. 1 is a schematic diagram of a network architecture based on a network configuration protocol (Network Configuration Protocol, NETCONF) according to an embodiment of this application;
FIG. 2 is a flowchart of a method for uploading a configuration file according to an embodiment of this application;
FIG. 3 is a flowchart of a method for downloading a configuration file according to an embodiment of this application;
FIG. 4 is a flowchart of another method for downloading a configuration file according to an embodiment of this application;
FIG. 5 is a schematic diagram of a structure of an apparatus 500 for uploading a configuration file according to an embodiment of this application;
FIG. 6 is a schematic diagram of a structure of an apparatus 600 for downloading a configuration file according to an embodiment of this application;
FIG. 7 is a schematic diagram of a structure of an apparatus 700 for sending a request according to an embodiment of this application;
FIG. 8 is a schematic diagram of a structure of an apparatus 800 for sending a request according to an embodiment of this application;
FIG. 9 is a schematic diagram of a structure of a device 900 according to an embodiment of this application;
FIG. 10 is a schematic diagram of a structure of a device 1000 according to an embodiment of this application;
FIG. 11 is a schematic diagram of a structure of a network system 1100 according to an embodiment of this application; and
FIG. 12 is a schematic diagram of a structure of a network system 1200 according to an embodiment of this application.

### DESCRIPTION OF EMBODIMENTS

In a conventional technology, a network device directly downloads a target configuration file from a storage apparatus that stores the target configuration file, or uploads a local configuration file to the storage apparatus. If the target configuration file or the local configuration file is large, file transfer efficiency is affected.

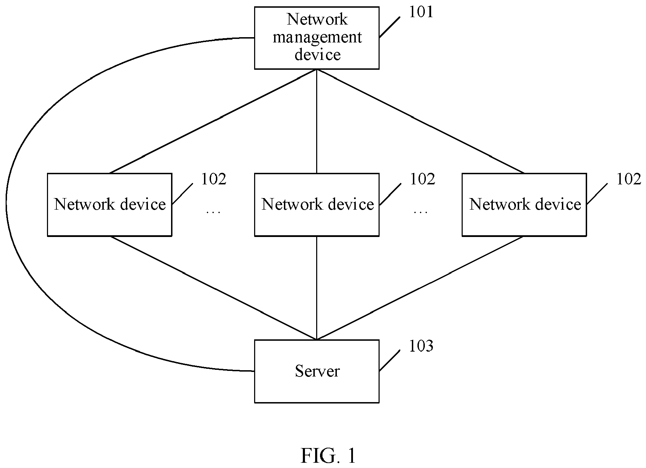

For example, FIG. 1 is a schematic diagram of a NETCONF-based network architecture.

In FIG. 1, the network architecture includes a network management device 101, at least one network device 102, and a server 103. The network management device 101 is separately connected to the at least one network device 102 and the server 103, and the at least one network device 102 is separately connected to the server 103.

The network management device 101 is configured to manage a local configuration file of the at least one network device 102, for example, send a configuration file export request or a configuration file upload request to the network device 102, where the configuration file export request is used for requesting the network device 102 to upload the local configuration file thereof to the server 103, and the configuration file import request is used for requesting the network device 102 to download a corresponding target configuration file from the server 103.

In a NETCONF protocol, both the local configuration file and the target configuration file are extensible markup language (Extensible Markup Language, XML) files. In a conventional technology, the network device 102 directly uploads the local configuration file or downloads the target configuration file. A larger file indicates lower file transfer efficiency.

To overcome the foregoing technical problems, embodiments of this application provide a method for uploading a configuration file and a method for downloading a configuration file. In the methods, both an uploaded local configuration file and a downloaded target configuration file are compressed files after compression, to improve file transfer efficiency. With reference to FIG. 1, the following separately describes the method for uploading a configuration file and the method for downloading a configuration file.

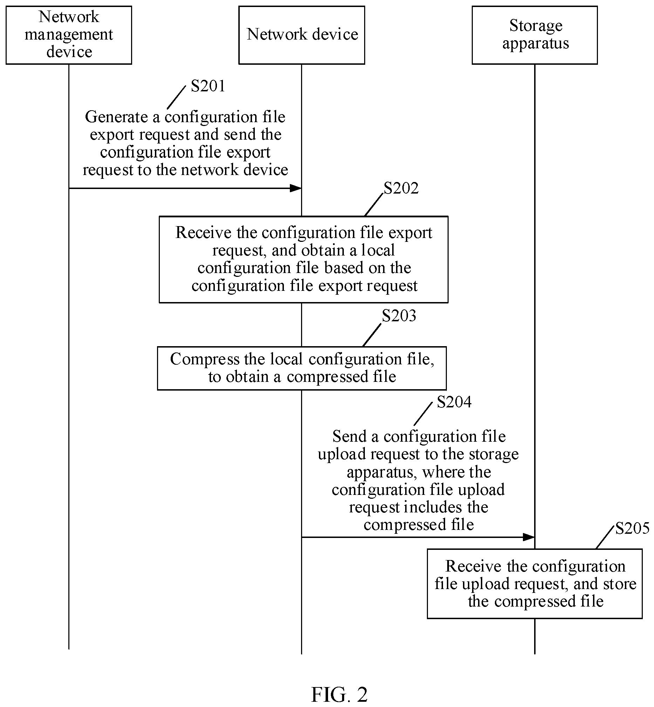

FIG. 2 is a flowchart of a method for uploading a configuration file according to an embodiment of this application.

In FIG. 2, the method for uploading a configuration file provided in this embodiment of this application includes the following steps.

S201: A network management device generates a configuration file export request and sends the configuration file export request to a network device.

In this embodiment of this application, the network management device may be the network management device 101 in FIG. 1, and may be specifically an element management system (Element Management System, EMS), a software-defined network (Software Defined Network, SDN) controller, or the like. The network device may be the network device 102 in FIG. 1, and may be specifically a device such as a router or a switch.

Optionally, a NETCONF client (client) may be installed on the network management device, to manage a local configuration file on the network device that communicates with the network management device. A NETCONF server (server) may be installed on the network device, to perform an operation on the local configuration file based on an instruction delivered by the NETCONF client.

In this embodiment of this application, the network management device may send the configuration file export request to the network device, where the configuration file export request is used for requesting the network device to compress the local configuration file and then send the compressed local configuration file to a storage apparatus. The storage apparatus may be the server 103 in FIG. 1, a random-access memory (random-access memory, RAM), a flash memory (flash), a read only memory (read only memory, ROM), an erasable programmable read only memory (erasable programmable read only memory, EPROM), an electrically erasable programmable read only memory (electrically erasable programmable read only memory, EEPROM), a hard disk, or any other form of storage medium known by a person skilled in the art. When the network management device is a server, the server may be the server 103 in FIG. 1, and a type of the server may be, for example, a server based on a protocol such as a file transfer protocol (File Transfer Protocol, FTP), a secure shell file transfer protocol (Secure Shell File Transfer Protocol, SFTP), or a hypertext transfer protocol (Hyper Text Transfer Protocol, HTTP).

In a NETCONF scenario, the configuration file export request may be specifically a copy configuration file (copy-config) remote procedure call (Remote Procedure Call, RPC) instruction, and the instruction includes the following code: source=running, and target=url.

That is, the configuration file export request may include a uniform resource locator (uniform resource locator, URL) of the server, to indicate the network device to upload the local configuration file to the server corresponding to the URL. The URL may carry an address of the server. In addition to the address of the server, optionally, the URL may further carry a file name of a compressed file obtained after the local configuration file is compressed.

For example, if the url is ftp://10.10.1.0/device_cfg.xml, 10.10.1.0 is the address of the server, and device _cfg is the file name of the compressed file.

Optionally, the configuration file export request may further include a compression algorithm identifier, and the compression algorithm identifier indicates a compression algorithm used in a process of compressing the local configuration file by the network device.

In a possible implementation, the compression algorithm identifier is a suffix of the file name of the compressed file, and the suffix may be carried in the url. For example, if the url is ftp://10.10.1.0/device_cfg.zip, ".zip" is the suffix, and the suffix indicates that the network device compresses the local configuration file based on a compression algorithm (namely, a zip algorithm) corresponding to ".zip". In another example, if the url is ftp://10.10.1.0/device_cfg.7z, ".7z" is the suffix, and the suffix indicates that the network device compresses the local configuration file based on a compression algorithm (namely, a Lempel-Ziv-Markov chain algorithm (Lempel-Ziv-Markov chain-Algorithm, lzma)) corresponding to ".7z".

Certainly, in addition to ".zip" or ".7z", the suffix of the compressed file may be a suffix corresponding to another compression algorithm, for example, ".tar" or ".gz". This is not specifically limited in this embodiment of this application. A person skilled in the art may design the suffix based on an actual situation.

In another possible implementation, the compression algorithm identifier is not carried in the configuration file export request in a form of the suffix of the compressed file.

For example, the target in the copy-config RPC instruction may be extended, so that the target further includes an extension item in addition to the url, where the extension item is used for carrying the compression algorithm identifier. For example, an extension item such as <nc-ext:compress-method>zip</nc-ext:compress-method> means that a compression algorithm is a zip algorithm.

The foregoing two possible implementations do not constitute a limitation on the technical solutions of this application, and a person skilled in the art may design the technical solutions based on an actual situation.

In this embodiment of this application, the configuration file export request may carry not only the compression algorithm identifier, but also a compression algorithm parameter. The compression algorithm parameter is a parameter used in the process of compressing the local configuration file by the network device, for example, a dictionary size or a word size.

In a possible design, the compression algorithm parameter may be carried in the copy-config RPC instruction in a form of an extension item of the target. By using zip algorithm parameters as an example, two extension items such as <nc-ext:dictionary-size>64</nc-ext:dictionary-size> and <nc-ext:word-size>8</nc-ext:word-size> mean that a zip algorithm whose dictionary size is 64 KB and whose word size is 8 bytes is used for compression.

Certainly, different compression algorithms correspond to different compression algorithm parameters. This is not limited in this embodiment of this application.

S202: The network device receives the configuration file export request, and obtains a local configuration file based on the configuration file export request.

As mentioned above, the local configuration file refers to a configuration file stored by the network device. The local configuration file includes configuration information of the network device, and may be used by the network device to perform packet forwarding or processing. Specific content of the local configuration file may include one or more types of configuration information such as user configuration information, route configuration information, or virtual private network (Virtual Private Network, VPN) tunnel configuration information.

In the NETCONF scenario, the local configuration file may include a plurality of configuration sub-files, and each of the plurality of configuration sub-files includes at least one yang module. Different yang modules can execute different functions. For related content, refer to the NETCONF protocol. Details are not described herein again.

In an example, the configuration file export request may further include indication information, and the indication information indicates the network device to split a local configuration file into the plurality of configuration sub-files. After receiving the configuration file export request, the network device may split the configuration file based on the indication information and a yang module included in the configuration file, to obtain the plurality of configuration sub-files.

Certainly, in addition to splitting the configuration file based on the yang module, in some embodiments, the configuration file may also be split based on a size of the configuration file. For example, for a configuration file of a size of 10 G, the configuration file may be split into 10 configuration sub-files, and a size of each configuration sub-file is 1 G.

In this embodiment of this application, S201 and that the network device receives the configuration file export request in S202 are optional steps. In actual application, the network device may directly obtain the local configuration file instead of obtaining the local configuration file based on the configuration file export request.

S203: The network device compresses the local configuration file, to obtain a compressed file.

In this embodiment of this application, the suffix of the local configuration file may be ".xml", ".cfg", or the like. This is not specifically limited in this embodiment of this application.

The network device may compress the local configuration file based on a default compression algorithm, or may determine the corresponding compression algorithm based on the compression algorithm identifier carried in the configuration file export request and compress the local configuration file based on the compression algorithm.

For example, if the suffix of the file name of the compressed file carried in the url in the configuration file export request is ".7z", the network device compresses the local configuration file based on the lzma algorithm; and if the configuration file export request includes an extension item such as <nc-ext:compress-method>zip</nc-ext:compress-method>, the network device may compress the local configuration file based on the zip algorithm.

In this embodiment of this application, the network device may compress the local configuration file based on a default compression algorithm parameter, or may compress the local configuration file based on the compression algorithm parameter carried in the configuration file export request. For the compression algorithm parameter, reference may be made to the foregoing descriptions. Details are not described herein again.

In addition, in this embodiment of this application, the file name of the compressed file may be a default file name, or the compressed file may also be named based on the file name included in the url carried in the configuration file export request.

For example, if the url in the configuration file export request is ftp://10.10.1.0/device_cfg.7z, the file name of the compressed file is determined as device_cfg.

When the local configuration file includes a plurality of configuration sub-files, the network device may compress the plurality of configuration sub-files into one compressed file, or may compress the plurality of configuration sub-files into a plurality of compressed files. This is not specifically limited in this embodiment of this application. Optionally, the network device may separately compress one or more configuration sub-files in the plurality of configuration sub-files, and then compress the compressed configuration sub-files and an uncompressed configuration sub-file (if existent) again, to obtain one compressed file.

S204: The network device sends a configuration file upload request to a storage apparatus, where the configuration file upload request includes the compressed file.

S205: The storage apparatus receives the configuration file upload request, and stores the compressed file.

In this embodiment of this application, the configuration file upload request is used for requesting the storage apparatus to store the compressed file. In an example, if the storage apparatus pre-stores a compressed file whose file name is the same as the file name of the compressed file uploaded by the network device, the storage apparatus may replace the compressed file with the same name in the storage apparatus with the compressed file from the network device, to update the compressed file of the network device; and if the storage apparatus pre-stores no compressed file whose file name is the same as the file name of the compressed file uploaded by the network device, the storage apparatus may directly store the uploaded compressed file.

After storing the compressed file from the network device, the storage apparatus may send an upload success response to the network device. After receiving the upload success response, the network device may send a configuration file export success response to the network management device, to notify the network management device that the compressed file is successfully uploaded. If the storage apparatus does not successfully receive and store the compressed file, the storage apparatus may send an upload failure response to the network device. If the network device receives the upload failure response or does not receive the upload success response from the storage apparatus within a preset time period, the network device may send the configuration file upload request carrying the compressed file to the storage apparatus again.

In an example, if the file name of the compressed file is not specified by the network management device, the file name of the compressed file may be carried in the configuration file export success response and sent to the network management device after the network device uploads the configuration file.

In addition, after storing the compressed file, the storage apparatus may send the compressed file to the network management device after receiving a file call instruction from the network management device, so that the network management device can manage the local configuration file of the network device. Alternatively, the storage apparatus may decompress the compressed file of the network device, and send, after receiving a file call instruction from the network management device, the configuration file of the network device obtained after decompression to the network management device. If the local configuration file of the network device includes a plurality of configuration sub-files, the storage apparatus may send one or more configuration sub-files in the plurality of configuration sub-files to the network management device according to a requirement of the network management device. Certainly, the foregoing implementations do not constitute a limitation on the technical solutions of this application, and a person skilled in the art may design the technical solutions based on an actual situation.

In this embodiment of this application, the network device compresses a to-be-uploaded local configuration file to obtain a compressed file, and uploads the compressed file. Because a size of the compressed file is less than a size of the local configuration file, file transfer efficiency is improved.

In addition, in this embodiment of this application, to improve file transfer security, optionally, before sending the compressed file to the storage apparatus, the network device may further encrypt the compressed file. The network device may encrypt the compressed file based on default encryption information, or may encrypt the compressed file based on encryption information sent by the network management device. The encryption information may include, for example, one or more of a password, a key, information about a location at which the network device stores the password, information about a location at which the network device stores the key, and an identifier of an encryption algorithm, which is specifically determined according to a type of the encryption algorithm. The encryption algorithm provided in this embodiment of this application may include, for example, advanced encryption standard (Advanced Encryption Standard, AES) 256, RSA2048, and the like. This is not specifically limited in this embodiment of this application. The encryption information may be carried in the configuration file export request sent by the network management device to the network device for sending, or may be separately sent. If the encryption information is carried in the configuration file export request for sending, in a possible implementation, the encryption information may be carried in the extension item of the target in the copy-config RPC instruction. For example, in an extension item such as <nc-ext:encrypt-password>TestPassword</nc-ext:encrypt-password>, TestPassword is a password.

After receiving the encrypted compressed file, the storage apparatus may first decrypt to obtain a decrypted compressed file, and then store the decrypted compressed file. Alternatively, the storage apparatus may directly store the encrypted compressed file.

In an example, to ensure reliability of a source of the compressed file, the storage apparatus may perform validity verification on the network device that sends the configuration file upload request. Specifically, the configuration file upload request may carry a user name and a password. After receiving the configuration file upload request, the storage apparatus may verify the user name and the password. If the verification succeeds, it is considered that a source of the configuration file upload request is valid; and if the verification fails, it is considered that the source of the configuration file upload request is invalid.

Before sending the configuration file upload request, the network device may pre-obtain the user name and the password. The user name and the password may be pre-configured on the network device, or may be obtained from the network management device. In a possible implementation, the configuration file export request sent by the network management device to the network device may carry the user name and the password. Optionally, the user name and the password may be carried in the url of the configuration file export request. For example, in a url such as ftp://user:password@10.10.1.0/device_cfg.xml, user is the user name, and password is the password.

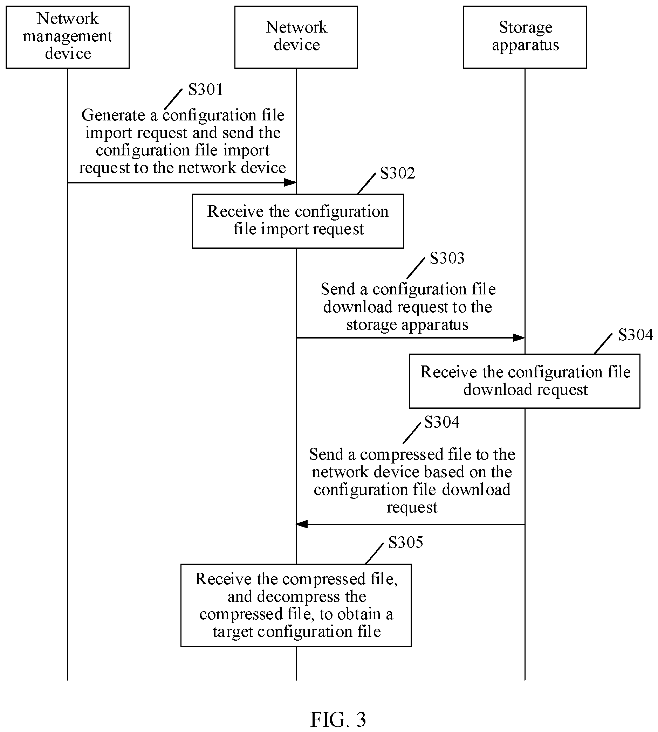

FIG. 3 is a flowchart of a method for downloading a configuration file according to an embodiment of this application.

In FIG. 3, the method for downloading a configuration file provided in this embodiment of this application includes the following steps.

S301: A network management device generates a configuration file import request and sends the configuration file import request to a network device.

For descriptions of the network management device, the network device, and a storage apparatus in this embodiment, refer to the foregoing descriptions. Details are not described herein again.

In this embodiment of this application, the configuration file import request sent by the network management device to the network device is used for requesting the network device to download, from the storage apparatus, a compressed file obtained by compressing a target configuration file, where the target configuration file includes configuration information of the network device, to update or replace a local configuration file of the network device.

In a NETCONF scenario, the configuration file import request may be a copy-config RPC instruction, and the instruction includes the following code: source=url, and target=running. The copy-config RPC instruction may instruct the network device to download, from a server corresponding to the url, the compressed file obtained by compressing the target configuration file, and replace the local configuration file with the target configuration file obtained by decompressing the compressed file. Alternatively, the configuration file import request may be an edit-config RPC instruction, and the instruction instructs the network device to download, from the server corresponding to the url, the compressed file obtained by compressing the target configuration file, and update the local configuration file with the target configuration file obtained by decompressing the compressed file.

Similar to the configuration file export request, the url included in the configuration file import request may include an address of the server. In addition to the address of the server, optionally, the URL may further include a file name of the compressed file, to indicate the network device to download the compressed file corresponding to the file name.

For example, if the url is ftp://10.10.1.1/device_cfg.xml, 10.10.1.1 is the address of the server, and device_cfg is a file name of a compressed file that needs to be downloaded.

In an example, the configuration file import request may further include a compression algorithm identifier, and the compression algorithm identifier indicates a compression algorithm used in a process of decompressing the compressed file by the network device.

In a possible implementation, the compression algorithm identifier is a suffix of the file name of the compressed file, and the suffix may be carried in the url. For example, if the url is ftp:H 10. 10. 1. 1/device_cfg.zip, ".zip" is the suffix, and the suffix indicates that the network device decompresses the downloaded compressed file based on a compression algorithm (namely, a zip algorithm) corresponding to ".zip". In another example, if the url is ftp://10.10.1.1/device_cfg.7z, ".7z" is the suffix, and the suffix indicates that the network device decompresses the downloaded compressed file based on a compression algorithm (namely, an lzma algorithm) corresponding to ".7z".

Certainly, in addition to ".zip" or ".7z", the suffix of the compressed file may be a suffix corresponding to another compression algorithm, for example, ".tar" or ".gz". This is not specifically limited in this embodiment of this application. A person skilled in the art may design the suffix based on an actual situation.

In another possible implementation, the compression algorithm identifier is not carried in the configuration file import request in a form of the suffix of the compressed file.

For example, the source in the copy-config RPC instruction may be extended, so that the source further includes an extension item in addition to the url, where the extension item is used for carrying the compression algorithm identifier. For example, an extension item such as <nc-ext:compress-method>zip</nc-ext:compress-method> means that a compression algorithm is a zip algorithm.

The foregoing two possible implementations do not constitute a limitation on the technical solutions of this application, and a person skilled in the art may design the technical solutions based on an actual situation.

S302: The network device receives the configuration file import request.

S303: The network device sends a configuration file download request to the storage apparatus.

In this embodiment of this application, the network device may send the configuration file download request to the storage apparatus based on the received configuration file import request. In an example, S301 and S302 are optional steps. That is, the network management device may not send the configuration file import request to the network device, and the network device does not send the configuration file download request to the storage apparatus based on the configuration file import request, but directly sends the configuration file download request to the storage apparatus.

Optionally, the configuration file download request includes a file name of the compressed file. If the configuration file import request includes the file name of the compressed file, the file name of the compressed file included in the configuration file download request may be the same as the file name in the configuration file import request.

S304: The storage apparatus receives the configuration file download request, and sends the compressed file to the network device based on the configuration file download request.

If the configuration file download request includes the file name of the compressed file, the storage apparatus may obtain the compressed file based on the file name, and send the compressed file to the network device.

In an example, the storage apparatus may directly store the compressed file corresponding to the network device, or may store the target configuration file corresponding to the network device. After receiving the configuration file download request, the storage apparatus compresses the target configuration file, to obtain the compressed file, and sends the compressed file to the network device.

S305: The network device receives the compressed file, and decompresses the compressed file, to obtain the target configuration file.

In this embodiment of this application, a suffix of the target configuration file may be ".xml", ".cfg", or the like. This is not specifically limited in this embodiment of this application.

The network device may decompress the compressed file based on a default compression algorithm, or may decompress the compressed file based on the compression algorithm corresponding to the compression algorithm identifier carried in the configuration file export request.

As mentioned above, the network device may replace or update the local configuration file based on the target configuration file obtained by decompressing the compressed file. If the network device has no local configuration file, the target configuration file may be directly stored.

In this embodiment of this application, the target configuration file may include a plurality of configuration sub-files. After obtaining the plurality of configuration sub-files, the network device may combine the plurality of configuration sub-files into one configuration file, and replace or update the local configuration file of the network device with the configuration file, to improve replacement efficiency or update efficiency.

After obtaining the target configuration file through decompression, the network device may send a download success response to the storage apparatus. If the network device does not receive the target configuration file within a preset time period after sending the configuration file download request to the storage apparatus, it indicates that the download fails. In this case, the network device may send the configuration file download request to the storage apparatus again.

Because the compressed file obtained by compressing the target configuration file, instead of the target configuration file, is transferred between the network device and the storage apparatus, and a size of the compressed file is less than a size of the target configuration file, file transfer efficiency is improved.

In addition, to improve file transfer security, in an example, the storage apparatus may send an encrypted compressed file to the network device. After receiving the encrypted compressed file, the network device first decrypts the compressed file, and then decompresses the compressed file.

In this embodiment of this application, the network device may decrypt the encrypted compressed file by using pre-obtained decryption information. The decryption information may include one or more of information such as a password, a key, information about a location at which the network device stores the password, information about a location at which the network device stores the key, and an identifier of a decryption algorithm, which is specifically determined according to a type of an encryption algorithm.

The pre-obtained decryption information may be sent by the network management device, sent by the storage apparatus, configured in the network device, or the like. This is not specifically limited in this application. If the decryption information is sent by the network management device, the decryption information may be carried in the configuration file import request for sending, or may be separately sent. If the decryption information is carried in the configuration file import request for sending, in a possible implementation, the decryption information may be carried in the extension item of the source in the copy-config RPC instruction. For descriptions of the encryption algorithm and the extension item, refer to the foregoing descriptions. Details are not described herein again.

To improve security, in another example, the storage apparatus may sign the compressed file by using a private key, to obtain signature information, and send the signature information and the compressed file together to the network device. The network device verifies the signature information based on a pre-obtained public key, to obtain a verification result. If the verification result is that the verification succeeds, it indicates that a source of the compressed file is valid, and the network device may decompress the compressed file and perform a subsequent operation; and if the verification result is that the verification fails, it indicates that the source of the compressed file is invalid, and the network device may delete the compressed file or perform an alarm.

In this embodiment of this application, both the public key pre-obtained by the network device and the private key pre-obtained by the storage apparatus may be provided or specified by the network management device. The public key may be carried in the configuration file import request sent by the network management device to the network device, and may be specifically located in the extension item of the source. Alternatively, the network management device may specify, by sending a storage location of the public key to the network device, the public key that needs to be used by the network device. For example, for an extension item such as <nc-ext:digit-sign-key-file>SamplePubKeyFileName</nc-ext:digit-sign-key-file>, SamplePubKeyFileName is an example of a public key file name, and the public key file name may be considered as the storage location of the public key in the network device.

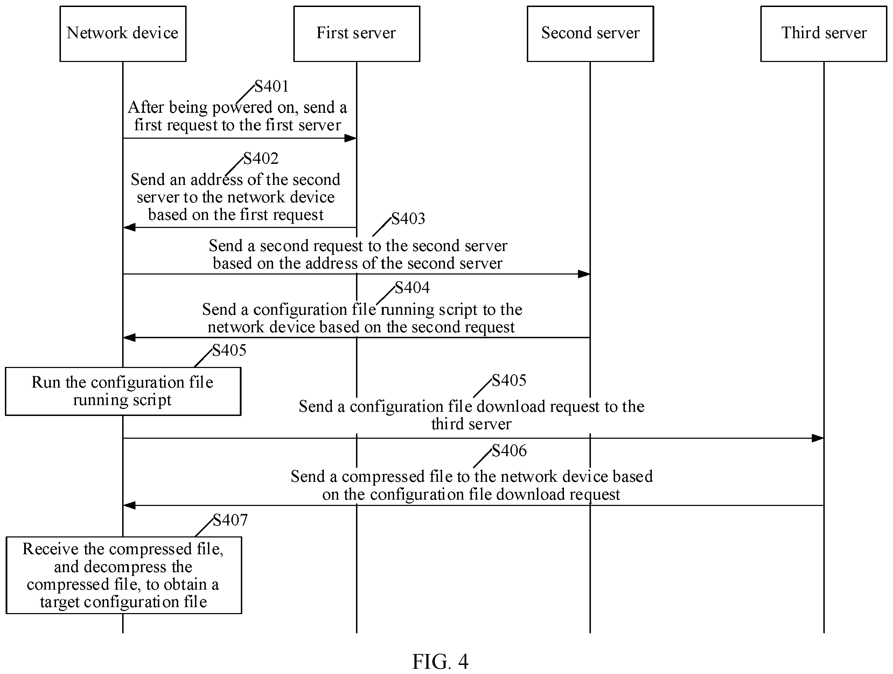

FIG. 4 is a flowchart of another method for downloading a configuration file according to an embodiment of this application.

In FIG. 4, the method for downloading a configuration file provided in this embodiment of this application may be applicable to a zero-configuration scenario of a network device, that is, the network device has no local configuration information after accessing a network for the first time. Certainly, the method may also be applicable to another scenario. This is not specifically limited in this embodiment of this application. The method specifically includes the following steps.

S401: After being powered on, a network device sends a first request to a first server, where the first request is used for requesting an address of a second server.

In this embodiment of this application, the network device may be a router or a switch. When accessing a network for the first time, the network device may send the first request to the first server. The first request may be, for example, a dynamic host configuration protocol (Dynamic Host Configuration Protocol, DHCP) packet. The first request is used for requesting the first server to send the address of the second server to the network device, where the second server is an address of a server that stores a configuration file running script. In addition to the address of the second server, the first request may be further used for requesting the first server to allocate information such as an Internet protocol (Internet Protocol, IP) address or a network management address of the network device to the network device.

S402: The first server sends the address of the second server to the network device based on the first request.

S403: The network device sends a second request to the second server based on the address of the second server, where the second request is used for requesting the second server to send the configuration file running script to the network device.

In this embodiment of this application, the configuration file running script is a script for running a configuration file, and functions of the configuration file running script may include downloading a configuration file, uploading a configuration file, updating a configuration file, and the like. This is not specifically limited in this embodiment of this application.

S404: The second server sends the configuration file running script to the network device based on the second request.

S405: The network device runs the configuration file running script, to trigger sending a configuration file download request to a third server.

In this embodiment of this application, the third server is a storage apparatus that stores a compressed file, where the compressed file is a file obtained by compressing a target configuration file of the network device, and the target configuration file is a configuration file that includes configuration information of the network device. For a type of the target configuration file and the configuration information of the network device, refer to the foregoing descriptions. Details are not described herein again.

In this embodiment of this application, the configuration file download request may carry a file name of a to-be-downloaded compressed file. The file name may be from the configuration file running script.

S406: The third server sends the compressed file to the network device based on the configuration file download request.

In this embodiment of this application, after receiving the configuration file download request, the third server may obtain the corresponding compressed file. If the configuration file download request carries the file name of the compressed file, the third server may obtain the compressed file corresponding to the file name.

The third server may store the target configuration file of the network device, and then compress, after receiving the configuration file download request, the target configuration file to obtain the compressed file. Alternatively, the third server may not store the target configuration file, but store only the compressed file.

S407: The network device receives the compressed file, and decompresses the compressed file, to obtain the target configuration file.

In this embodiment of this application, for related descriptions of decompressing the compressed file by the network device, refer to the embodiment shown in FIG. 3. Details are not described herein again. After obtaining the target configuration file, the network device may store the target configuration file as a local configuration file.

Optionally, a compression algorithm used by the network device to decompress the compressed file may be specified by the third server, or the compressed file may be decompressed based on a default compression algorithm. If the compression algorithm used by the network device to decompress the compressed file is specified by the third server, the third server may send a compression algorithm identifier to the network device before sending the compressed file, or send the compression algorithm identifier and the compressed file together to the network device, so that the network device can decompress the compressed file based on the compression algorithm corresponding to the compression algorithm identifier.

Because the third server sends, to the network device, the compressed file obtained by compressing the target configuration file, instead of directly sending the target configuration file, file transfer efficiency is improved compared with a conventional manner.

In addition, to improve file transfer security, before sending the compressed file to the network device, the third server may further encrypt the compressed file. For related content of encryption, refer to the foregoing descriptions. Details are not described herein again. After receiving the encrypted compressed file, the network device may first decrypt the compressed file, and then decompress the compressed file.

To verify validity of the file, the third server may further sign the compressed file by using a private key, to obtain signature information. The network device may pre-obtain a public key from the configuration file running script, and verify the signature information based on the public key. If the verification succeeds, it indicates that a source of the compressed file is valid, and the compressed file may be decompressed; and if the verification fails, it indicates that the source of the compressed file is invalid, and the compressed file may be deleted. Certainly, there may be another manner of obtaining the public key by the network device, for example, from the first server. This is not specifically limited in this embodiment of this application. A person skilled in the art may design the manner based on an actual situation.

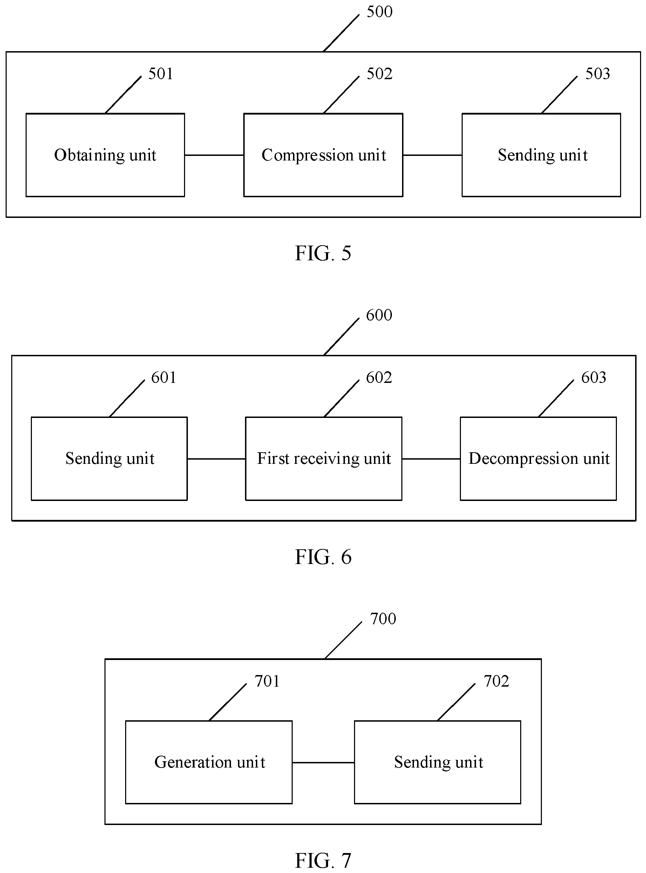

Refer to FIG. 5. An embodiment of this application further provides an apparatus 500 for uploading a configuration file. The apparatus 500 for uploading a configuration file may implement a function of the network device in the embodiment shown in FIG. 2. The apparatus 500 for uploading a configuration file includes an obtaining unit 501, a compression unit 502, and a sending unit 503. The obtaining unit 501 is configured to implement S202 in the embodiment shown in FIG. 2, the compression unit 502 is configured to implement S203 in the embodiment shown in FIG. 2, and the sending unit 503 is configured to implement S204 in the embodiment shown in FIG. 2.

Specifically, the obtaining unit 501 is configured to obtain a local configuration file, where the local configuration file includes configuration information of the network device.

The compression unit 502 is configured to compress the local configuration file, to obtain a compressed file.

The sending unit 503 is configured to send a configuration file upload request to a storage apparatus, where the configuration file upload request includes the compressed file, and the configuration file upload request is used for requesting the storage apparatus to store the compressed file.

For a specific execution process, refer to the detailed descriptions of corresponding steps in the foregoing embodiment shown in FIG. 2. Details are not described herein again.

Refer to FIG. 6. An embodiment of this application further provides an apparatus 600 for downloading a configuration file. The apparatus 600 for downloading a configuration file may implement a function of the network device in the embodiment shown in FIG. 3 or FIG. 4. The apparatus 600 for downloading a configuration file includes a sending unit 601, a first receiving unit 602, and a decompression unit 603. The sending unit 601 is configured to implement S303 in the embodiment shown in FIG. 3 or S405 in the embodiment shown in FIG. 4, and the first receiving unit 602 and the decompression unit 603 are configured to implement S305 in the embodiment shown in FIG. 3 or S407 in the embodiment shown in FIG. 4.

Specifically, the sending unit 601 is configured to send a configuration file download request to a storage apparatus.

The first receiving unit 602 is configured to receive a compressed file sent by the storage apparatus based on the configuration file download request.

The decompression unit 603 is configured to decompress the compressed file, to obtain a target configuration file, where the target configuration file includes configuration information of the network device.

For a specific execution process, refer to the detailed descriptions of corresponding steps in the foregoing embodiment shown in FIG. 3. Details are not described herein again.

Refer to FIG. 7. An embodiment of this application further provides an apparatus 700 for sending a request. The apparatus 700 for sending a request may implement a function of the network management device in the embodiment shown in FIG. 2. The apparatus 700 for sending a request includes a generation unit 701 and a sending unit 702. The generation unit 701 and the sending unit 702 are configured to implement S201 in the embodiment shown in FIG. 2.

Specifically, the generation unit 701 is configured to generate a configuration file export request, where the configuration file export request indicates a network device to compress a local configuration file to obtain a compressed file and send the compressed file to a storage apparatus, the configuration file export request includes a compression algorithm identifier, and the compression algorithm identifier indicates a compression algorithm used in a process of compressing the local configuration file by the network device.

The sending unit 702 is configured to send the configuration file export request to the network device.

For a specific execution process, refer to the detailed descriptions of corresponding steps in the foregoing embodiment shown in FIG. 2. Details are not described herein again.

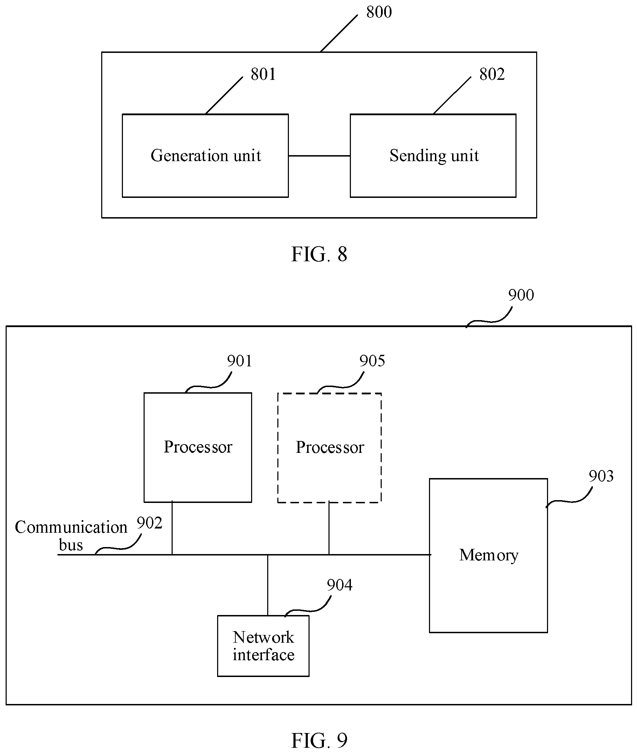

Refer to FIG. 8. An embodiment of this application further provides an apparatus 800 for sending a request. The apparatus 800 for sending a request may implement a function of the network management device in the embodiment shown in FIG. 3. The apparatus 800 for sending a request includes a generation unit 801 and a sending unit 802. The generation unit 801 and the sending unit 802 are configured to implement S301 in the embodiment shown in FIG. 3.

Specifically, the generation unit 801 is configured to generate a configuration file import request, where the configuration file import request indicates a network device to download a compressed file from a storage apparatus and decompress the compressed file to obtain a target configuration file, the configuration file import request includes a compression algorithm identifier, and the compression algorithm identifier indicates a compression algorithm used in a process of decompressing the compressed file by the network device.

The sending unit 802 is configured to send the configuration file import request to the network device.

For a specific execution process, refer to the detailed descriptions of corresponding steps in the foregoing embodiment shown in FIG. 3. Details are not described herein again.

It should be noted that, in this embodiment of this application, division into the units is an example, and is merely a logical function division. In actual implementation, another division manner may be used. Functional units in embodiments of this application may be integrated into one processing unit, or each of the units may exist alone physically, or two or more units are integrated into one unit. For example, in the foregoing embodiment, the obtaining unit and the processing unit may be a same unit or different units. The integrated unit may be implemented in a form of hardware, or may be implemented in a form of a software functional unit.

FIG. 9 is a schematic diagram of a structure of a device 900 according to an embodiment of this application. The apparatus 500 for uploading a configuration file, the apparatus 600 for downloading a configuration file, the apparatus 700 for sending a request, or the apparatus 800 for sending a request may be implemented by using the device shown in FIG. 9. Refer to FIG. 9. The device 900 includes at least one processor 901, a communication bus 902, and at least one network interface 904. Optionally, the device 900 may further include a memory 903.

The processor 901 may be a general-purpose central processing unit (central processing unit, CPU), an application-specific integrated circuit (application-specific integrated circuit, ASIC), or one or more integrated circuits (integrated circuit, IC) configured to control program execution of solutions of this application. The processor may be configured to process a configuration file, to implement the method for uploading a configuration file or the method for downloading a configuration file provided in embodiments of this application.

For example, when the network device in FIG. 2 is implemented by using the device shown in FIG. 9, the processor may be configured to obtain a local configuration file, and compress the local configuration file, to obtain a compressed file; and send a configuration file upload request to a storage apparatus, where the configuration file upload request includes the compressed file.

When the network management device in FIG. 2 is implemented by using the device shown in FIG. 9, the processor may be configured to generate a configuration file export request and send the configuration file export request to a network device.

When the network device in FIG. 3 is implemented by using the device shown in FIG. 9, the processor may be configured to send a configuration file download request to a storage apparatus; receive a compressed file sent by the storage apparatus based on the configuration file download request; and decompress the compressed file, to obtain a target configuration file, where the target configuration file includes configuration information of the network device.

When the network management device in FIG. 3 is implemented by using the device shown in FIG. 9, the processor may be configured to generate a configuration file import request and send the configuration file import request to a network device.

The communication bus 902 is configured to transfer information between the processor 901, the network interface 904, and the memory 903.

The memory 903 may be a read-only memory (read-only memory, ROM) or another type of static storage device that may store static information and instructions. The memory 903 may alternatively be a random access memory (random access memory, RAM) or another type of dynamic storage device that may store information and instructions, or may be a compact disc read-only memory (compact disc read-only memory, CD-ROM) or another optical disc storage, an optical disc storage (including a compact disc, a laser disc, an optical disc, a digital versatile disc, a Blu-ray disc, and the like), a disk storage medium or another magnetic storage device, or any other medium that can be configured to carry or store expected program code in a form of instructions or a data structure and can be accessed by a computer. However, the memory 903 is not limited thereto. The memory 903 may exist independently, and is connected to the processor 901 through the communication bus 902. Alternatively, the memory 903 and the processor 901 may be integrated together.

Optionally, the memory 903 is configured to store program code or instructions for executing the solutions of this application, and the processor 901 controls the execution. The processor 901 is configured to execute the program code or instructions stored in the memory 903. The program code may include one or more software modules. Optionally, the processor 901 may alternatively store the program code or instructions for executing the solutions of this application. In this case, the processor 901 does not need to read the program code or instructions from the memory 903.

The network interface 904 may be an apparatus such as a transceiver, and is configured to communicate with another device or a communication network. The communication network may be an Ethernet, a radio access network (RAN), a wireless local area network (wireless local area network, WLAN), or the like. In this embodiment of this application, the network interface 904 may be configured to receive a packet sent by another node in a segment routing network, or send a packet to another node in the segment routing network. The network interface 904 may be an Ethernet (Ethernet) interface, a fast Ethernet (fast Ethernet, FE) interface, a gigabit Ethernet (gigabit Ethernet, GE) interface, or the like.

In specific implementation, in an embodiment, the device 900 may include a plurality of processors, for example, the processor 901 and a processor 905 shown in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

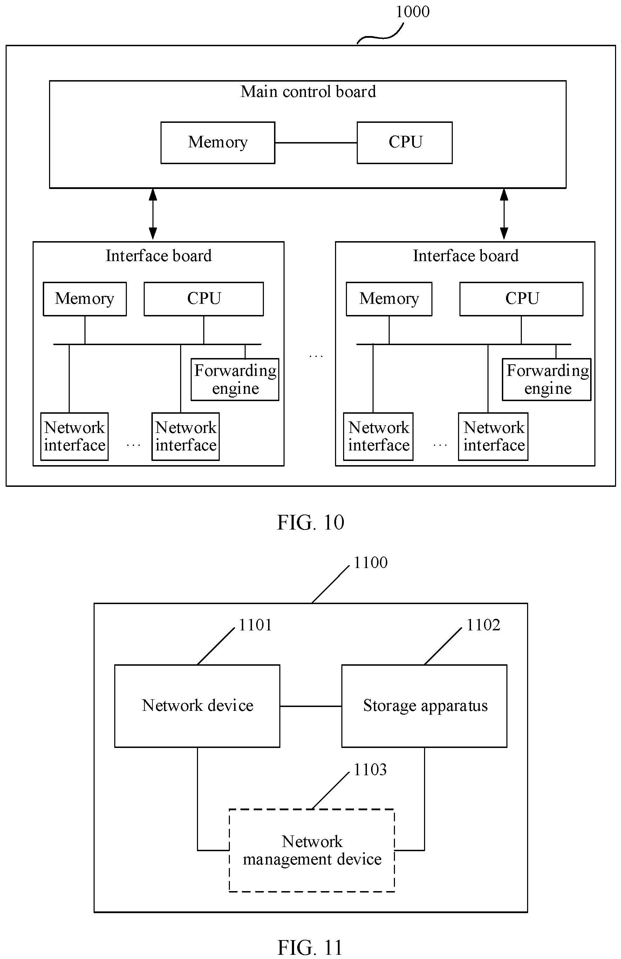

FIG. 10 is a schematic diagram of a structure of a device 1000 according to an embodiment of this application. The network devices in FIG. 2 to FIG. 4 and the network management devices in FIG. 2 and FIG. 3 may be implemented by using the device shown in FIG. 10. Refer to the schematic diagram of the structure of the device shown in FIG. 10. The device 1000 includes a main control board and one or more interface boards. The main control board is communicatively connected to the interface board. The main control board is also referred to as a main processing unit (main processing unit, MPU) or a route processor card (route processor card). The main control board includes a CPU and a memory, and is responsible for controlling and managing each component in the device 1000, including route computation, and device management and maintenance functions. The interface board is also referred to as a line processing unit (line processing unit, LPU) or a line card (line card), and is configured to receive and send a packet. In some embodiments, the main control board communicates with the interface board or the interface board communicates with the interface board by using a bus. In some embodiments, the interface boards communicate with each other through a switching board. In this case, the device 1000 also includes a switching board. The switching board is communicatively connected to the main control board and the interface boards, and is configured to forward data between the interface boards. The switching board may also be referred to as a switch fabric unit (switch fabric unit, SFU). The interface board includes a CPU, a memory, a forwarding engine, and an interface card (interface card, IC). The interface card may include one or more network interfaces. The network interface may be an Ethernet interface, an FE interface, a GE interface, or the like. The CPU is communicatively connected to the memory, the forwarding engine, and the interface card. The memory is configured to store a forwarding table. The forwarding engine is configured to forward a received packet based on the forwarding table stored in the memory. If a destination address of the received packet is an IP address of the device 1000, the forwarding engine sends the packet to the CPU of the main control board or the CPU of the interface board for processing. If the destination address of the received packet is not the IP address of the device 1000, the forwarding engine searches the forwarding table based on the destination address. If a next hop and an outbound interface that correspond to the destination address are found from the forwarding table, the forwarding engine forwards the packet to the outbound interface corresponding to the destination address. The forwarding engine may be a network processor (network processor, NP). The interface card, also referred to as a subcard, may be installed on the interface board. The interface card is responsible for converting an optical/electrical signal into a data frame, checking validity of the data frame, and forwarding the data frame to the forwarding engine for processing or the CPU of the interface board. In some embodiments, the CPU may also perform a function of the forwarding engine, for example, implementing software forwarding based on a general-purpose CPU, so that no forwarding engine is required in the interface board. In some embodiments, the forwarding engine may be implemented by using an ASIC or a field programmable gate array (field programmable gate array, FPGA). In some embodiments, the memory that stores the forwarding table may alternatively be integrated in the forwarding engine, and is used as a part of the forwarding engine.

Refer to FIG. 11. An embodiment of this application further provides a network system 1100. The system 1100 is configured to implement the method for uploading a configuration file in the embodiment shown in FIG. 2. Specifically, the network system 1100 includes a network device 1101, and further includes at least one of a storage apparatus 1102 or a network management device 1103. The network device 1101 is configured to implement a function of the network device in the embodiment shown in FIG. 2 or a function of the apparatus 500 for uploading a configuration file in the embodiment shown in FIG. 5, the storage apparatus 1102 is configured to implement a function of the storage apparatus in the embodiment shown in FIG. 2, and the network management device 1103 is configured to implement a function of the network management device in the embodiment shown in FIG. 2. For a specific execution process, refer to the detailed descriptions of corresponding steps in the foregoing embodiment shown in FIG. 2. Details are not described herein again.

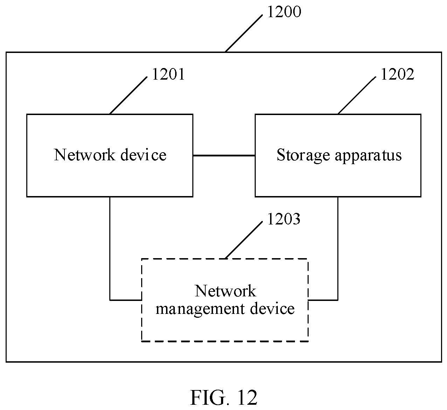

Refer to FIG. 12. An embodiment of this application further provides a network system 1200. The system 1200 is configured to implement the method for downloading a configuration file in the embodiment shown in FIG. 3 or FIG. 4. Specifically, the network system 1200 includes a network device 1201, and further includes at least one of a storage apparatus 1202 or a network management device 1203. The network device 1201 is configured to implement a function of the network device in the embodiments shown in FIG. 3 and FIG. 4 or a function of the apparatus 600 for downloading a configuration file in the embodiment shown in FIG. 6, the storage apparatus 1202 is configured to implement a function of the storage apparatus in the embodiment shown in FIG. 3 or a function of the third server in the embodiment shown in FIG. 4, and the network management device 1203 is configured to implement a function of the network management device in the embodiment shown in FIG. 3. For a specific execution process, refer to the detailed descriptions of corresponding steps in the foregoing embodiment shown in FIG. 3 or FIG. 4. Details are not described herein again.

An embodiment of this application further provides a chip system, including a processor. The processor is coupled to a memory, and the memory is configured to store a program or instructions. When the program or the instructions is executed by the processor, the chip system is enabled to implement the methods of the network devices in the embodiments shown in FIG. 2 to FIG. 4, or implement the method of the network management device in the embodiment shown in FIG. 2 or FIG. 3. Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system on chip (system on chip, SoC), a CPU, an NP, a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium, including instructions. When the instructions are run on a computer, the computer is enabled to perform the method for uploading a configuration file or the method for downloading a configuration file in the foregoing embodiments.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatuses, and methods may be implemented in other manners. For example, the described apparatus embodiments are merely examples. For example, unit division is merely logical module division, and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be obtained based on actual requirements to achieve the objectives of the solutions of embodiments.

In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, functions described in the present invention may be implemented by hardware, software, firmware, or any combination thereof. When the functions are implemented by using software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A method for uploading a configuration file, comprising:
obtaining, by a network device, a local configuration file, wherein the local configuration file comprises configuration information of the network device;
compressing, by the network device, the local configuration file, to obtain a compressed file; and
sending, by the network device, a configuration file upload request to a storage apparatus, wherein the configuration file upload request comprises the compressed file, and the configuration file upload request is used for requesting the storage apparatus to store the compressed file.

2. The method according to claim 1, wherein before the compressing, by the network device, the local configuration file, the method further comprises:
receiving, by the network device, a configuration file export request from a network management device, wherein the configuration file export request comprises a compression algorithm identifier, and the compression algorithm identifier indicates a compression algorithm used in a process of compressing the local configuration file by the network device; and
the compressing, by the network device, the local configuration file comprises:
compressing, by the network device, the local configuration file based on the compression algorithm identifier.

3. The method according to claim 2, wherein the compression algorithm identifier is a suffix of a file name of the compressed file.

4. The method according to claim 3, wherein the configuration file export request comprises a uniform resource locator URL, and the URL comprises the suffix.

5. The method according to any one of claims 2 to 4, wherein the configuration file export request further comprises a compression algorithm parameter; and
the compressing, by the network device, the local configuration file based on the compression algorithm identifier comprises:
compressing, by the network device, the local configuration file based on the compression algorithm identifier and the compression algorithm parameter.

6. The method according to any one of claims 1 to 5, wherein the local configuration file comprises a plurality of configuration sub-files, and each of the plurality of configuration sub-files comprises at least one yang module.

7. The method according to any one of claims 1 to 6, wherein the sending, by the network device, a configuration file upload request to a storage apparatus comprises:
encrypting, by the network device, the compressed file; and
sending, by the network device, the configuration file upload request comprising the encrypted compressed file to the storage apparatus.

8. The method according to claim 7, wherein before the encrypting, by the network device, the compressed file, the method further comprises:
receiving, by the network device, encryption information from the network management device, wherein the encryption information indicates the network device to encrypt the compressed file based on the encryption information.

9. The method according to claim 8, wherein the encryption information comprises one or more of the following:
a password, a key, information about a location at which the network device stores the password, information about a location at which the network device stores the key, and an identifier of an encryption algorithm.

10. A method for downloading a configuration file, comprising:
sending, by a network device, a configuration file download request to a storage apparatus;
receiving, by the network device, a compressed file sent by the storage apparatus based on the configuration file download request; and
decompressing, by the network device, the compressed file, to obtain a target configuration file, wherein the target configuration file comprises configuration information of the network device.

11. The method according to claim 10, wherein before the decompressing, by the network device, the compressed file, the method further comprises:
receiving, by the network device, a configuration file import request from a network management device, wherein the configuration file import request comprises a compression algorithm identifier, and the compression algorithm identifier indicates a compression algorithm used in a process of decompressing the compressed file by the network device; and
the decompressing, by the network device, the compressed file comprises:
decompressing, by the network device, the compressed file based on the compression algorithm corresponding to the compression algorithm identifier.

12. The method according to claim 11, wherein the compression algorithm identifier is a suffix of a file name of the compressed file.

13. The method according to claim 12, wherein the configuration file import request comprises a uniform resource locator URL, and the URL comprises the suffix.

14. The method according to any one of claims 11 to 13, wherein the receiving, by the network device, a compressed file sent by the storage apparatus based on the configuration file download request comprises:
receiving, by the network device, an encrypted compressed file sent by the storage apparatus based on the configuration file download request, and decrypting the encrypted compressed file.

15. The method according to claim 14, wherein before the decrypting, by the network device, the encrypted compressed file, the method further comprises:
receiving, by the network device, decryption information from the network management device, wherein the decryption information indicates the network device to decrypt the encrypted compressed file based on the decryption information.

16. The method according to claim 15, wherein the decryption information comprises one or more of the following:
a password, a key, information about a location at which the network device stores the password, information about a location at which the network device stores the key, and an identifier of a decryption algorithm.

17. The method according to any one of claims 10 and 14 to 16, wherein the decompressing, by the network device, the compressed file comprises:
receiving, by the network device, signature information from the storage apparatus, and verifying the signature information based on a public key of the network device, to obtain a verification result, wherein the signature information is information obtained by signing the compressed file by using a private key; and
decompressing, by the network device, the compressed file in a case that the verification result is that the verification succeeds.

18. The method according to any one of claims 10 to 17, wherein the configuration file comprises a plurality of configuration sub-files, and each of the plurality of configuration sub-files comprises at least one yang module.

19. A method for sending a request, comprising:
generating, by a network management device, a configuration file export request, wherein the configuration file export request indicates a network device to compress a local configuration file to obtain a compressed file and send the compressed file to a storage apparatus, the configuration file export request comprises a compression algorithm identifier, and the compression algorithm identifier indicates a compression algorithm used in a process of compressing the local configuration file by the network device; and
sending, by the network management device, the configuration file export request to the network device.

20. The method according to claim 19, wherein the compression algorithm identifier is a suffix of a file name of the compressed file.

21. The method according to claim 20, wherein the configuration file export request comprises a uniform resource locator URL, and the URL comprises the suffix.

22. The method according to any one of claims 19 to 21, wherein the configuration file export request further comprises a compression algorithm parameter, and the compression algorithm parameter is used for compressing the local configuration file by the network device.

23. The method according to any one of claims 19 to 22, further comprising:
sending, by the network management device, encryption information to the network device, wherein the encryption information is used for encrypting the compressed file by the network device.

24. A method for sending a request, comprising:
generating, by a network management device, a configuration file import request, wherein the configuration file import request indicates a network device to download a compressed file from a storage apparatus and decompress the compressed file to obtain a target configuration file, the configuration file import request comprises a compression algorithm identifier, and the compression algorithm identifier indicates a compression algorithm used in a process of decompressing the compressed file by the network device; and
sending, by the network management device, the configuration file import request to the network device.

25. The method according to claim 24, wherein the compression algorithm identifier is a suffix of a file name of the compressed file.

26. The method according to claim 25, wherein the configuration file import request comprises a uniform resource locator URL, and the URL comprises the suffix.

27. The method according to any one of claims 24 to 26, further comprising:
sending, by the network management device, decryption information to the network device, wherein the decryption information indicates the network device to decrypt the encrypted compressed file based on the decryption information.

28. An apparatus for uploading a configuration file, used in a network device, the apparatus comprising:
an obtaining unit, configured to obtain a local configuration file, wherein the local configuration file comprises configuration information of the network device;
a compression unit, configured to compress the local configuration file, to obtain a compressed file; and
a sending unit, configured to send a configuration file upload request to a storage apparatus, wherein the configuration file upload request comprises the compressed file, and the configuration file upload request is used for requesting the storage apparatus to store the compressed file.

29. The apparatus according to claim 28, further comprising:
a first receiving unit, configured to receive, before the compression unit compresses the local configuration file, a configuration file export request from a network management device, wherein the configuration file export request comprises a compression algorithm identifier, and the compression algorithm identifier indicates a compression algorithm used in a process of compressing the local configuration file by the network device, wherein
the compression unit is configured to compress the local configuration file based on the compression algorithm identifier.

30. The apparatus according to claim 29, wherein the compression algorithm identifier is a suffix of a file name of the compressed file.

31. The apparatus according to claim 30, wherein the configuration file export request comprises a uniform resource locator URL, and the URL comprises the suffix.

32. The apparatus according to any one of claims 29 to 31, wherein the configuration file export request further comprises a compression algorithm parameter; and
the compression unit is configured to compress the local configuration file based on the compression algorithm identifier and the compression algorithm parameter.

33. The apparatus according to any one of claims 29 to 32, wherein the local configuration file comprises a plurality of configuration sub-files, and each of the plurality of configuration sub-files comprises at least one yang module.

34. The apparatus according to any one of claims 29 to 33, wherein
the sending unit is configured to encrypt the compressed file, and send the configuration file upload request comprising the encrypted compressed file to the storage apparatus.

35. The apparatus according to claim 34, further comprising:
a second receiving unit, configured to receive, before the sending unit encrypts the compressed file, encryption information from the network management device, wherein the encryption information indicates the network device to encrypt the compressed file based on the encryption information.

36. An apparatus for downloading a configuration file, used in a network device, the apparatus comprising:
a sending unit, configured to send a configuration file download request to a storage apparatus;
a first receiving unit, configured to receive a compressed file sent by the storage apparatus based on the configuration file download request; and
a decompression unit, configured to decompress the compressed file, to obtain a target configuration file, wherein the target configuration file comprises configuration information of the network device.

37. The apparatus according to claim 36, further comprising:
a second receiving unit, configured to receive, before the decompression unit decompresses the compressed file, a configuration file import request from a network management device, wherein the configuration file import request comprises a compression algorithm identifier, and the compression algorithm identifier indicates a compression algorithm used in a process of decompressing the compressed file by the network device, wherein
the decompression unit is configured to decompress the compressed file based on the compression algorithm corresponding to the compression algorithm identifier.

38. The apparatus according to claim 37, wherein the compression algorithm identifier is a suffix of a file name of the compressed file.

39. The apparatus according to claim 38, wherein the configuration file import request comprises a uniform resource locator URL, and the URL comprises the suffix.

40. The apparatus according to any one of claims 36 to 39, wherein
the first receiving unit is configured to receive an encrypted compressed file sent by the storage apparatus based on the configuration file download request, and decrypt the encrypted compressed file.

41. The apparatus according to claim 40, further comprising:
a third receiving unit, configured to receive, before the first receiving unit decrypts the encrypted compressed file, decryption information from the network management device, wherein the decryption information indicates the network device to decrypt the encrypted compressed file based on the decryption information.

42. The apparatus according to any one of claims 36 and 39 to 41, wherein
the decompression unit is configured to receive signature information from the storage apparatus, and verify the signature information based on a public key of the network device, to obtain a verification result, wherein the signature information is information obtained by signing the compressed file by using a private key; and decompress, by the network device, the compressed file in a case that the verification result is that the verification succeeds.

43. The apparatus according to any one of claims 36 to 42, wherein the configuration file comprises a plurality of configuration sub-files, and each of the plurality of configuration sub-files comprises at least one yang module.

44. An apparatus for sending a request, used in a network management device, the apparatus comprising:
a generation unit, configured to generate a configuration file export request, wherein the configuration file export request indicates a network device to compress a local configuration file to obtain a compressed file and send the compressed file to a storage apparatus, the configuration file export request comprises a compression algorithm identifier, and the compression algorithm identifier indicates a compression algorithm used in a process of compressing the local configuration file by the network device; and
a sending unit, configured to send the configuration file export request to the network device.

45. The apparatus according to claim 44, wherein
the sending unit is further configured to send encryption information to the network device, wherein the encryption information is used for encrypting the compressed file by the network device.

46. An apparatus for sending a request, used in a network management device, the apparatus comprising:
a generation unit, configured to generate a configuration file import request, wherein the configuration file import request indicates a network device to download a compressed file from a storage apparatus and decompress the compressed file to obtain a target configuration file, the configuration file import request comprises a compression algorithm identifier, and the compression algorithm identifier indicates a compression algorithm used in a process of decompressing the compressed file by the network device; and
a sending unit, configured to send the configuration file import request to the network device.

47. The apparatus according to claim 46, wherein
the sending unit is further configured to send decryption information to the network device, wherein the decryption information indicates the network device to decrypt the encrypted compressed file based on the decryption information.

48. A network device, comprising at least one processor, wherein the at least one processor is coupled to at least one memory; and
the at least one processor is configured to execute a computer program or instructions stored in the at least one memory, to enable the network device to perform the method for uploading a configuration file according to any one of claims 1 to 9, or perform the method for downloading a configuration file according to any one of claims 10 to 18.

49. A network management device, comprising at least one processor, wherein the at least one processor is coupled to at least one memory; and
the at least one processor is configured to execute a computer program or instructions stored in the at least one memory, to enable the network management device to perform the method for sending a request according to any one of claims 19 to 27.

50. A network system, comprising a network device and a storage apparatus, wherein
the network device is configured to perform the method for uploading a configuration file according to any one of claims 1 to 9; and
the storage apparatus is configured to store a compressed file.

51. A network system, comprising a network device and a storage apparatus, wherein
the network device is configured to perform the method for downloading a configuration file according to any one of claims 10 to 18; and
the storage apparatus is configured to send a compressed file to the network device.

52. A computer-readable storage medium, comprising instructions, a program, or code, wherein when the instructions, the program, or the code is executed on a computer, the computer is enabled to perform the method for uploading a configuration file according to any one of claims 1 to 9, or perform the method for downloading a configuration file according to any one of claims 10 to 18, or perform the method for sending a request according to any one of claims 19 to 27.

53. A chip, comprising a memory and a processor, wherein the memory is configured to store instructions or program code, and the processor is configured to call and run the instructions or the program code from the memory, to perform the method for uploading a configuration file according to any one of claims 1 to 9, or perform the method for downloading a configuration file according to any one of claims 10 to 18, or perform the method for sending a request according to any one of claims 19 to 27.
